Europäisches Patentamt

European Patent Office

Office européen des brevets

(19)

(11) Publication number: **0 255 993**
**A2**

(12) # EUROPEAN PATENT APPLICATION

(21) Application number: **87830303.1**

(22) Date of filing: **31.07.87**

(51) Int. Cl.⁴: **F 16 J 15/52**

(30) Priority: **05.08.86 IT 496486**

(43) Date of publication of application:
**17.02.88 Bulletin 88/07**

(84) Designated Contracting States:
**BE CH DE FR GB LI SE**

(71) Applicant: **Grillini, Marco**
**VIA CORONEDI BERTI 3**
**BOLOGNA (IT)**

(72) Inventor: **Grillini, Marco**
**VIA CORONEDI BERTI 3**
**BOLOGNA (IT)**

(74) Representative: **Dall'Olio, Giancarlo**
**INVENTION s.n.c. Via Arienti 26**
**I-40124 Bologna (IT)**

(54) **Sealing device for keeping two fluids separate in contiguous zones of mechanisms which are moving in relation to each other.**

(57) An alternating compressor is fitted with a bellows 43 made of an elastic material, the ends 41 and 42 of the said bellows 43 are fixed by means of associated clamping devices 45a, 45b to the rod 6 of the compressor piston 5 and to the internal cylinder head 2a respectively of the compressor.

The bellows act as a seal between the lubricating oil of the rod actuating mechanism and the air drawn into the said cylinder.

# Description

## Sealing device for keeping two fluids separate in contiguous zones of mechanisms which are moving in relation to each other

Numerous types of mechanism have sealing devices located at the couplings between the various parts.

As is well known, sealing devices are generally of two types: the first type consists of devices placed between non-moving parts (e.g. gaskets) while the second consists of devices fitted to parts which move in relation to each other (e.g. spring washer, rubber washer, piston ring etc.).

The various motives for choosing to adopt one or other of the aforementioned types of device are too well known to be listed here; it is true however that the success or failure of a particular project often depends on the realisation of a sealing device with satisfactory characteristics.

With particular reference to sealing devices between moving parts where the seal is provided by the sliding friction between the device and one of the two said moving parts (e.g. a piston ring mounted on a piston and in contact with the cylinder walls), it can be said that the progressive wearing down of the device itself does not, within certain limits, prejudice the overall operation of the mechanism on which said device is installed.

Having said this however there are some cases where small leaks or seepage of fluid (e.g. lubricating oil) past the sealing device cannot, for various reasons, be tolerated.

This is the case for example with alternating air compressors of the "dry" type (so called because the piston-cylinder contact does not involve oil in any way) because the air, compressed by the aforementioned compressors, is for scientific, medical or alimentary uses; obviously in these cases it is necessary to prevent any possible pollution of the air by lubricants which might leak past worn sealing devices from the piston actuating parts (lubricated with oil) to the piston-cylinder contact (dry lubricated).

The object of the present invention is to propose a sealing device which is able to guarantee perfect separation between the lubricating oil present in the base and in the actuating/drive mechanisms of a dry, air compressor and the air drawn into the cylinder by the piston of the said type of compressor.

The aforementioned separation provided by the present device has innovative characteristics in comparison with already known devices insofar that it ensures an absolutely "fluid-proof" seal for the total life of the compressor.

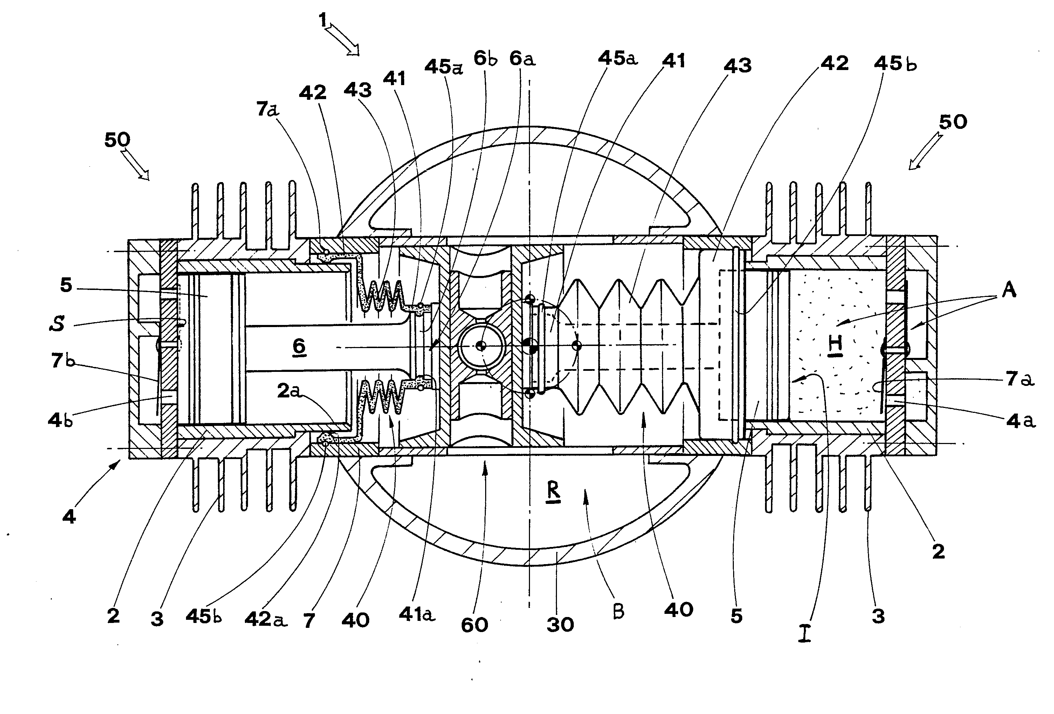

The above mentioned separation is obtained by means of a sealing device for keeping separate two fluids in the contiguous zones of parts which are moving in relation to each other, these parts are of mechanisms, in particular alternating compressors, where the cylinder, piston and rod are situated in the first of the said zones which involves the first of the said fluids, while the remaining fluid involves the second zone where the actuating mechanism of the aforementioned rod and the base of the compressor are located: the said device is <u>characterised by the fact</u> that it comprises a bellows, made of an elastic material, the ends of which are shaped to form two collars, the first and second respectively, which are clamped and sealed by means of clamping parts to, respectively, the said rod and to the internal head of the said cylinder, the bellows being such as to assume the two characterisic extreme positions "closed" and "open" caused by the said rod and defined by the position of the piston at top dead centre and bottom dead centre respectively. The characteristics of the present invention are given in the description hereinunder which refers to the drawing which in turn shows a schematic cross-section of an dry, alternating compressor with two horizontally opposed cylinders each of which is fitted with the present device.

In the drawing, 50 indicates a unit formed of a cylinder 2, with cooling fins 3, closed at one end with a head 4, which is coupled to a piston 5 fitted with a rod 6.

The lubrication of the contact surface between the piston 5 and the cylinder 2 is of the dry type and follows the known principle; cylinder capacity, dynamically defined by the movement of the piston, together with the inlet port 4a and the exhaust port 4b on the head 4 and fitted with valves 7a and 7b all comprise the first zone A which involves the first fluid H (e.g. air) which is destined to undergo compression.

The alternating movement of the piston 5 from top dead centre S to bottom dead centre I and viceversa is caused by the rod 6 controlled by a second unit consisting of a actuating unit 60 of a known type driven by a crankshaft located inside a base 30 which comprises a second zone B which involves the presence of a second fluid R (e.g. oil) which provides the lubrication for the second unit 60.

The separation between the said zones A and B and the separation between the fluids H and R is obtained by means of the present device 40, which is described hereunder.

In a typical compressor 1 there are as many devices 40 as there are cylinders, the compressor itself consisting of an assembly of the said first and second mechanical units, 50 and 60 respectively.

The device 40 is made of an elastic material (rubber or synthetic resin) and consists of a bellows 43 the ends of which are shaped to form the sealing parts, respectively first and second, which in the drawing are the two collars 41 and 42.

The collar 41 encases the bottom end 6a of the rod 6 close to the point where the rod 6 engages with the second mechanical unit 60.

On the inside of the collar 41 there is a ring profile 41a which inserts into a corresponding groove 6b machined into the bottom end of the rod 6a.

On the outside of the collar 41, in correspondence with the profile 41a, there is a metal clamping ring 45a which compresses a circular strip of the collar itself.

The second collar 42 (in the example shown in the drawing this has a greater diameter than the first collar) is located between the outer surfaces of the internal head 2a of the cylinder 2 and the inner surface of a sleeve 7 which is coaxial with the cylinder.

The sleeve 7 is fixed on the base 30 and supports the cylinder 2, the cylinder fins 3 and the head 4.

A locking ring 45b clamps onto the outside of the collar 42; the said locking ring 45b slots into a groove 7a machined into the inner surface of the said sleeve 7.

On the inside of the said collar 42 there is a anular profile 42a, similar to that previously described, on which the locking ring 45b exerts pressure.

The bellows 43, as can be clearly seen in the attached drawing, alternately assumes two characteristic extreme positions, "closed" and "open", which correspond respectively with the dead centres S and I of the related piston.

The shape of the device, in particular the thickness of the walls, restricts the elastic deformation only tothose areas designated for this purpose, i.e. to the bellows 43 and not the collars.

It will be clear from the above description and from an analysis of the drawing that the use of the present invention ensures absolute separation between the zones A and B and consequently between the two fluids H and R and that this characteristic will remain unaltered in time given that the present device, in comparison with known devices, does not involve sliding friction and therefore wear.

In the case where the fluid H is air, the aforementioned advantage will permit the utilisation of this air without further problems even for those uses where maximum cleanliness of the air is indispensable.

It is also obvious that the same said advantage can easily be employed in other applications of a generally mechanical nature involving mechanical parts which move in relation to each other. It is understood furthermore that for special applications it will be possible to specially shape one or both of the sealing parts so that these can, for example, take the form of a circular crown to be located between two metal parts fixed to each other.

It is understood that the description supplied herein is solely an unlimited example such that possible variations in constructional details (for example the collar 42 could be clamped and sealed to the internal surface of the internal head 2a of the cylinder) will not affect the protective framework afforded to the invention as claimed hereinafter.

## Claims

1) A sealing device for keeping separate two fluids in the contiguous zones of parts which are moving in relation to each other, these parts are of mechanisms, in particular alternating compressors (1), where the cylinder (2), piston (5) and rod (6) are situated in the first of the said zones (A) which involves the first of the said fluids, while the remaining fluid involves the second zone (B) where the actuating mechanism (60) of the said rod (6) and the base of the compressor (30) are located; the said device is characterised by the fact that it comprises a bellows (43), made of an elastic material, the ends of which are shaped to form two sealing parts (41, 42), the first and second respectively, and which are clamped and sealed by means of clamping parts (45a, 45b) to, respectively, the said rod and to the internal head (2a) of the said cylinder (2), the said bellows being such as to assume the two characteristic extreme positions "closed" and "open" caused by the said rod (6) and defined by the position of the piston (5) at top dead centre (S) and bottom dead centre (I) respectively.

2) A device according to claim 1, characterised by the fact that the first and second sealing parts (41, 42) are to be identified as the same number of collars.

3) A device according to claim 2, characterised by the fact that the second collar (42) is clamped and sealed, by means of a clamping part (45b), on the outer surface of the internal head (4) of the cylinder (2)

4) A device according to claim 2, characterised by the fact that the second collar (42) is clamped and sealed, by means of a clamping part (45b), on the inner surface of the internal head (2a) of the cylinder (2).

5) A device according to claim 2, where the said clamping parts (45a, 45b) exert a prefixed clamping pressure on a circular strip of the related collar characterised by the fact that the said collars, in correspondence with the said strips and on the side opposite to the said clamping parts, have corresponding ring profiles (41a, 42a) which are kept pressed by the related clamping parts against, respectively, the side surfaces of the said rod (6) and against the inner or outer surfaces of the internal head (2a) of the cylinder (2).

6) A device according to claim 5, characterised by the fact that the said profiles (41a, 42a) are designed to be inserted into corresponding grooves made in the corresponding surfaces of the rod (6) and the cylinder (2).

7) A device according to claim 2, characterised by the fact that the first collar (41) is clamped and sealed by means of a clamping part (45a) on the side surface of the rod (6) at the bottom end (6a).

8) A device according to claim 3, where a sleeve (7) fixed to a base (30) supporting the cylinder (2) and the cylinder fins (3), characterised by the fact that said locking device (45b) belonging to the second collar (42) slots into a corresponding groove (7a) made in the inner surface of the said sleeve (7).

0255993